# EUROPÄISCHE PATENTSCHRIFT

(11) **EP 2 573 538 B1**
(45) Veröffentlichungstag und Bekanntmachung des Hinweises auf die Patenterteilung: **19.07.2017**
(21) Anmeldenummer: 12181722.5
(22) Anmeldetag: 24.08.2012
(51) Int. Cl.: G01M 15/02

(54) **Vorrichtung zur Versorgung eines Verbrennungsmotors auf einem Prüfstand mit zumindest einem Nutzmedium**
Device for supplying a combustion engine on a test bench with at least one usable medium
Dispositif d'alimentation d'un moteur à combustion interne sur un banc d'essai avec au moins un fluide d'exploitation

(30) Priorität: 22.09.2011 AT 13682011
(43) Veröffentlichungstag der Anmeldung: 27.03.2013
(73) Patentinhaber: AVL List GmbH, 8020 Graz (AT)
(72) Erfinder: Mosbacher, Ferdinand, 8162 Passail (AT); Pressler, Michael, 8584 Hirschegg (AT); Schleifer, Karol, 8111 Judendorf (AT)
(74) Vertreter: Patentanwälte Pinter & Weiss OG

(56) Entgegenhaltungen:
- EP-A1- 0 857 958
- WO-A1-91/10818
- WO-A2-2008/135697
- DE-A1- 10 302 629

## Beschreibung

Die Erfindung betrifft eine Vorrichtung zur Versorgung eines Verbrennungsmotors auf einem Prüfstand mit zumindest einem konditionierten, zumindest temperaturkonditionierten Nutzmedium, vorzugsweise Kühlwasser, Schmieröl, etc., über einen geschlossenen Kreislauf, umfassend zumindest ein dem Verbrennungsmotor vorgeschaltetes Konditioniersystem für das jeweilige Nutzmedium und eine Zuleitung und einen Rücklauf für das Nutzmedium, wobei eine die Zuleitung und den Rücklauf verbindende Bypassleitung vorgesehen ist, wobei eine Einrichtung zur variablen Aufteilung der Strömung des Nutzmediums vom Verbrennungsmotor zwischen dem Rücklauf und der Bypassleitung vorgesehen sind, und eine Einrichtung zur zusätzlichen Konditionierung, welche eine H eizeinrichtung ist, in dem durch die Bypassleitung, den Zulauf und den Rücklauf gebildeten Kreislauf eingesetzt ist und die Einrichtung zur variablen Aufteilung der Strömung des Nutzmediums mit einem Steuersystem gekoppelt ist, das die Aufteilung der Strömung auf Kennfeldbasis vornimmt. Zur Kühlung eines Verbrennungsmotors, der als Prüfling auf einem Prüfstand vorgesehen ist, sind bereits viele verschiedene Konfigurationen vorgeschlagen worden. Aufgrund der am Kühlstand vorhandenen großen Wassermenge im Kühlkreislauf, verglichen mit den Verhältnissen bei im Fahrzeug eingebautem Motor, sind meist sehr groß dimensionierte Heizanlagen nötig. Gegenüber den ca. 5 bis 7 Litern Kühlwasser im Fahrzeugkühlkreislauf sind am Prüfstand 30 bis 50 Liter vorhanden, die dann Heizanlagen mit bis zu 80 kW Leistung erfordern.

EP 0857958 A1 offenbart ein System zum schnellen Abkühlen von Motoren auf einem Prüfstand. Zwischen einer Zuleitung und einer Rückleitung zum Motor ist ein Bypass vorgesehen, in dem sich ein Wärmetauscher befindet. Durch Öffnen/ Schließen von Ventilen kann das Kühlmittel über den Bypass umgeleitet werden.

WO 91/10818 A1 offenbart ein Kühlsystem für einen Fahrzeugmotor. In einer Bypassleitung ist eine Heizeinrichtung für eine Fahrgastzelle angeordnet, um die Fahrgastzelle mit der Motorwärme zu heizen. Eine weitere Bypassleitung umgeht den Motorkühler.

DE 10302629 A1 offenbart ein Motorkühlsystem, bei dem zwischen einer Rückleitung und einer Zuleitung eine Bypassleitung vorgesehen ist, deren Durchflussmenge von einem Stromregelventil gesteuert wird.

WO 2008/135697 A2 offenbart eine Kühlvorrichtung für einen Prüfstand zum Testen der Kaltstarteigenschaften eines Motors, wobei die Kühlflüssigkeit zwischen den Testläufen über eine zusätzliche Kühlvorrichtung geleitet werden können, um den Motor schnell für den nächsten Kaltstart vorzubereiten.

Die Aufgabe der vorliegenden Erfindung war daher eine verbesserte Vorrichtung, die eine hochdynamische Nachführung zumindest der Temperatur eines Nutzmediums für eine Verbrennungskraftmaschine mit geringerem apparativen Aufwand gestattet.

Zur Lösung dieser Aufgabe ist die Vorrichtung erfindungsgemäß dadurch gekennzeichnet, dass die Einrichtung zur variablen Aufteilung der Strömung des Nutzmediums mit einem Steuersystem gekoppelt ist, das die Aufteilung der Strömung auf Kennfeldbasis vornimmt.

Mit dieser Nachbildung eines auch im Fahrzeug vorhandenen Zweikreis-Systems mit je nach Bedarf einstellbarem Verhältnis zwischen innerer Zirkulation und großem Kühlkreislauf kann mit einer kleiner dimensionierten Heizanlage das Auslangen gefunden werden. Mithilfe der Einrichtung zur zusätzlichen Konditionierung können noch steilere Gradienten im Temperaturverlauf erzielt werden bzw. können prüfstandsinduzierte Verluste ausgeglichen werden.

Gemäß einer weiteren vorteilhaften Ausführungsform der Erfindung ist die Vorrichtung dadurch gekennzeichnet, dass im Rücklauf zwischen dem Verbrennungsmotor und der Einrichtung zur variablen Aufteilung der Strömung des Nutzmediums eine Einrichtung zur Beeinflussung der Strömung des Nutzmediums, vorzugsweise eine Pumpe, eingesetzt ist. Diese gestattet den Ausgleich allfälliger Druckverluste und gewährleistet einen stabileren Kreislauf.

Eine erfindungsgemäße Ausführungsform sieht vor, dass die Einrichtung zur variablen Aufteilung der Strömung des Nutzmediums mit einem Steuersystem gekoppelt ist, das die Aufteilung der Strömung auf Kennfeldbasis vornimmt, wodurch eine rasche und präzise Steuerung gewährleistet ist.

Dabei können im Steuersystem Abläufe abgespeichert sein, die eine Konditionierung des Nutzmediums entsprechend realistischen Fahrprofilen mittels der Einrichtung zur variablen Aufteilung, nötigenfalls auch unter Einbeziehung der Einrichtung zur zusätzlichen Konditionierung und/oder der Einrichtung zur Beeinflussung der Strömung, bewirken.

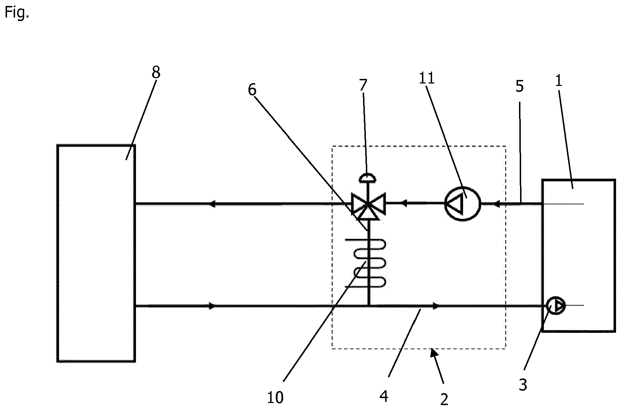

In der nachfolgenden Beschreibung soll die Erfindung anhand eines bevorzugten Ausführungsbeispieles und unter Bezugnahme auf die beigefügte Zeichnung näher erläutert werden.

Die Zeichnungsfigur ist eine schematische Darstellung eines Ausführungsbeispieles einer erfindungsgemäßen Vorrichtung.

Ein Verbrennungsmotor 1 ist als Prüfling auf einem Prüfstand vorgesehen. Er weist einen internen Kühlwasserkreislauf 2 mit einer Kühlwasserpumpe 3, einer Zuleitung 4 und einem Rücklauf 5 auf. Im gegenständlichen Fall ist das Kühlwasser das Nutzmedium, welches dem Prüfling in konditioniertem, zumindest temperaturkonditioniertem Zustand über einen geschlossenen Kreislauf zugeführt werden soll. Die gleichen Maßnahmen und Vorteil könnten aber auch für Schmieröl oder andere Nutzmedien des Prüflings vorgesehen sein.

Eine Bypassleitung 6 verbindet die Zuleitung 4 und den Rücklauf 5. Ein Wegeventil 7 ist als Einrichtung zur variablen Aufteilung der Strömung des Kühlwassers zwischen der Bypassleitung 6 und einer Konditioniereinrichtung 8 vorgesehen. Das Wegeventil 7 oder jede andere Einrichtung zur variablen Aufteilung der Strömung des Nutzmediums ist vorteilhafterweise mit einem Steuersystem gekoppelt, das die Aufteilung der Strömung auf Kennfeldbasis vornimmt. Vorzugsweise sind in diesem Steuersystem Abläufe abgespeichert, die eine Konditionierung des Nutzmediums entsprechend realistischen Fahrprofilen, unter Einbeziehung einer zusätzlichen Heizeinrichtung 10 in der Bypassleitung 6 und gegebenenfalls einer weitere Pumpe 11 im kleinen Kühlkreislauf, aber extern der Verbrennungskraftmaschine 1, bewirken.

## Patentansprüche

1. Vorrichtung zur Versorgung eines Verbrennungsmotors (1) auf einem Prüfstand mit zumindest einem konditionierten, zumindest temperaturkonditionierten Nutzmedium, vorzugsweise Kühlwasser, Schmieröl, etc., über einen geschlossenen Kreislauf, umfassend zumindest ein dem Verbrennungsmotor (1) vorgeschaltetes Konditioniersystem (8) für das jeweilige Nutzmedium und eine Zuleitung (4) und einen Rücklauf (5) für das Nutzmedium, wobei eine die Zuleitung (4) und den Rücklauf (5) verbindende Bypassleitung (6) vorgesehen ist, wobei eine Einrichtung (7) zur variablen Aufteilung der Strömung des Nutzmediums vom Verbrennungsmotor (1) zwischen dem Rücklauf (5) und der Bypassleitung (6) vorgesehen ist, und wobei eine Einrichtung zur zusätzlichen Konditionierung, welche eine Heizeinrichtung (10) ist, in dem durch die Bypassleitung (6), den Zulauf (4) und den Rücklauf (5) gebildeten Kreislauf eingesetzt ist, **dadurch gekennzeichnet, dass** die Einrichtung (7) zur variablen Aufteilung der Strömung des Nutzmediums mit einem Steuersystem gekoppelt ist, das die Aufteilung der Strömung auf Kennfeldbasis vornimmt.

2. Vorrichtung nach Anspruch 1, **dadurch gekennzeichnet, dass** im Rücklauf (5) zwischen dem Verbrennungsmotor (1) und der Einrichtung (7) zur variablen Aufteilung der Strömung des Nutzmediums eine Einrichtung zur Beeinflussung der Strömung des Nutzmediums, vorzugsweise eine Pumpe (11), eingesetzt ist.

3. Vorrichtung nach Anspruch 1 oder 2, **dadurch gekennzeichnet, dass** im Steuersystem Abläufe abgespeichert sind, die eine Konditionierung des Nutzmediums entsprechend realistischen Fahrprofilen mittels der Einrichtung zur variablen Aufteilung, nötigenfalls auch unter Einbeziehung der Einrichtung (10) zur zusätzlichen Konditionierung und/oder der Einrichtung (11) zur Beeinflussung der Strömung, bewirken.

## Claims

1. A device for supplying an internal combustion engine (1) on a test bench with at least one conditioned, at least temperature-conditioned, useful medium, preferably cooling water, lubricating oil, etc., via a closed circuit comprising at least one conditioning system (8) connected upstream of the internal combustion engine (1) for the respective useful medium and a feed line (4) and a return (5) for the useful medium, wherein a bypass line (6) connecting the feed line (4) and the return (5) is provided, wherein a device (7) for variably distributing the flow of the useful medium from the internal combustion engine (1) between the return (5) and the bypass line (6) is provided, and wherein a device for additional conditioning, which is a heating device (10), is used in the circuit formed by the bypass line (6), the feed (4) and the return (5), **characterized in that** the device (7) for variably distributing the flow of the useful medium is coupled to a control system which undertakes the distribution of the flow on a characteristic field basis.

2. The device according to claim 1, **characterized in that** a device for influencing the flow of the useful medium, preferably a pump (11), is used in the return (5) between the internal combustion engine (1) and the device (7) for variably distributing the flow of the useful medium.

3. The device according to claim 1 or 2, **characterized in that** procedures which effect a conditioning of the useful medium in accordance with realistic driving profiles by means of the variable distribution device, if necessary also including the device (10) for additional conditioning and/or the device (11) for influencing the flow, are stored in the control system.

## Revendications

1. Dispositif d'alimentation d'un moteur à combustion (1) sur un banc d'essai avec au moins un fluide d'exploitation conditionné, au moins conditionné à la température, de préférence de l'eau de refroidissement, de l'huile de graissage, etc. en circuit fermé, comprenant au moins un système de conditionnement (8) branché en amont du moteur à combustion (1) pour le fluide d'exploitation respectif et une conduite d'alimentation (4) et un retour (5) pour le fluide d'exploitation, dans lequel il est prévu une conduite de dérivation (6) reliant la conduite d'alimentation (4) et le retour (5), dans lequel il est prévu un dispositif (7) pour la répartition variable du courant de fluide d'exploitation issu du moteur à combustion (1) entre le retour (5) et la conduite de dérivation (6) et dans lequel on utilise un dispositif pour le conditionnement supplémentaire, qui est un dispositif de chauffage (10), dans le circuit formé par la conduite de dérivation (6), la conduite d'alimentation (4) et le retour (5), **caractérisé en ce que** le dispositif (7) pour la répartition variable du courant de fluide d'exploitation est couplé à un système de commande qui effectue la répartition du courant sur la base de champs caractéristiques.

2. Dispositif selon la revendication 1, **caractérisé en ce qu'**on utilise dans le retour (5) entre le moteur à combustion (1) et le dispositif (7) pour la répartition variable du courant de fluide d'exploitation un dispositif permettant d'influencer le courant de fluide d'exploitation, de préférence une pompe (11).

3. Dispositif selon la revendication 1ou 2, **caractérisé en ce qu'**on mémorise dans le système de commande des opérations qui provoquent un conditionnement du fluide d'exploitation en fonction des profils de conduite réalistes au moyen du dispositif de répartition variable, le cas échéant également en incluant le dispositif (10) de conditionnement supplémentaire et/ou le dispositif (11) permettant d'influencer le courant.
